# EUROPEAN PATENT SPECIFICATION

(11) **EP 3 288 304 B1**
(45) Date of publication and mention of the grant of the patent: **10.07.2019**
(21) Application number: 15892096.7
(22) Date of filing: 15.05.2015
(51) Int. Cl.: H04W 16/14, H04L 1/18, H04L 5/00, H04L 1/16

(54) **DATA TRANSMISSION APPARATUS**
DATENÜBERTRAGUNGSVORRICHTUNG
APPAREIL DE TRANSMISSION DE DONNÉES

(43) Date of publication of application: 28.02.2018
(73) Proprietor: Huawei Technologies Co., Ltd., Longgang District Shenzhen, Guangdong 518129 (CN)
(72) Inventor: WANG, Da, Shenzhen Guangdong 518129 (CN); WANG, Jian, Shenzhen Guangdong 518129 (CN)
(74) Representative: Thun, Clemens
(86) International application number: PCT/CN2015/079038
(87) International publication number: WO 2016/183715

(56) References cited:
- EP-A1- 3 139 531
- WO-A2-2011/139069
- CN-A- 101 345 608
- CN-A- 104 380 780
- US-A1- 2005 207 345
- US-A1- 2009 279 480
- US-A1- 2011 205 996
- KT CORP: "Discussion on DL HARQ operation for LAA", 3GPP DRAFT; R1-151995, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934845, Retrieved from the Internet: URL:http://www.3gpp.org/ftp/Meetings_3GPP_ SYNC/RAN1/Docs/ [retrieved on 2015-04-19]

## Description

### TECHNICAL FIELD

The present invention relates to the communications field, and in particular, to a data transmission method, apparatus, and system.

### BACKGROUND

In a wireless communications network, each device needs to use a frequency resource to transmit data, and the frequency resource is also referred to as a spectrum. The spectrum may be classified into a licensed spectrum and an unlicensed spectrum. The licensed spectrum is a frequency resource exclusive to some operators, and the unlicensed spectrum is a public frequency resource in the wireless communications network. A carrier on the licensed spectrum is referred to as a licensed carrier, and a carrier on the unlicensed spectrum is referred to as an unlicensed carrier. In the wireless communications network, each device may contend for the unlicensed carrier to transmit data.

Further, KT Corp:"Discussion on DL HARQ operation for LAA" 3GPP draft; R1-151995, 19. April 2015 refers to DL HARQ operations, wherein HARQ-ACK transmission/timing corresponding to PDSCH transmission on SCell in an unlicensed band should be used as an existing CA mechanism without an additional specification impact.

To improve channel transmission reliability, HARQ (Hybrid Automatic Repeat Request, hybrid automatic repeat request) is widely applied as a main data retransmission means. In an LAA-LTE (LicensedAssisted Access Using Long Term Evolution, licensed-assisted access using Long Term Evolution) system, after obtaining an unlicensed carrier by contention, a sending device transmits data on the unlicensed carrier.
The sending device cannot always occupy a channel when using the unlicensed carrier to transmit the data. Therefore, after occupying the channel of the unlicensed carrier for a particular period of time, the sending device needs to re-preempt the channel, resulting in retransmission interruption of a HARQ retransmission packet; a receive end needs to wait to receive the HARQ retransmission packet only after the sending device re-preempts the channel, resulting in a relatively large delay in data transmission.

### SUMMARY

Embodiments of the present invention provide a data transmission method, apparatus, and system, so as to resolve a prior-art problem that data transmission is delayed when a device needs to re-preempt an unlicensed carrier to transmit a HARQ retransmission packet.
To achieve the foregoing objective, the following technical solutions are used in the embodiments of the present invention:
In a first aspect a first device is provided comprising:
- a sending module configured to transmit data to a second device on a first carrier;
- an obtaining module configured to obtain first configuration information, wherein the first configuration information is a first location of transmitting a retransmission packet on a second carrier, the first location comprises N subframes of the second carrier, and N is a positive integer; and
- a retransmission module configured to transmit the retransmission packet of the data to the second device on the second carrier according to the first configuration information,
- wherein if the retransmission module is further configured to transmit a retransmission packet that belongs to a third carrier to the second device on the second carrier, the first configuration information further comprises an offset P of a second location, of transmitting the retransmission packet of the third carrier on the second carrier, relative to the first location, the second location comprises M subframes of the second carrier, M is a positive integer, and P is 0 or a positive integer; and
   the retransmission module is further configured to transmit the retransmission packet of the third carrier in the second location of the second carrier according to the first configuration information, wherein the first and third carriers are unlicensed carriers.

In a first implementation form of the first aspect the obtaining module comprises:
a determining submodule configured to determine the first configuration information;
a sending submodule configured to send the first configuration information to the second device; and
a receiving submodule configured to receive the first configuration information sent by the second device; wherein
the receiving submodule is further configured to receive the first configuration information sent by a third device.

In a second aspect a second device is provided comprising:
- a first receiving module configured to receive data transmitted by a first device on a first carrier;
- an obtaining module configured to obtain first configuration information, wherein the first configuration information is a first location of transmitting a retransmission packet on a second carrier, the first location comprises N subframes of the second carrier, and N is a positive integer; and
- a second receiving module configured to receive, according to the first configuration information, the retransmission packet that is of the data and that is transmitted by the first device on the second carrier
- wherein if the second receiving module is further configured to receive, on the second carrier according to the first configuration information, a retransmission packet that belongs to a third carrier and that is transmitted by the first device, the first configuration information further comprises an offset P of a second location, of transmitting the retransmission packet of the third carrier on the second carrier, relative to the first location, the second location comprises M subframes of the second carrier, M is a positive integer, and P is 0 or a positive integer; and
- the second receiving module is further specifically configured to receive, according to the first configuration information, the retransmission packet that is of the third carrier and that is transmitted by the first device in the second location of the second carrier, wherein the first and third carriers are unlicensed carriers.

In a first implementation form of the second aspect the obtaining module comprises:
a determining submodule configured to determine the first configuration information;
a sending submodule configured to send the first configuration information to the first device; and
a receiving submodule configured to receive the first configuration information sent by the first device; wherein
the receiving submodule is further configured to receive the first configuration information sent by a third device.

According to the data transmission method, apparatus, and system provided in the embodiments of the present invention, the first device transmits the data to the second device on the first carrier; the first device obtains the first configuration information; and the first device transmits the retransmission packet of the data to the second device on the second carrier according to the first configuration information, where the first configuration information indicates the sequence or the location of transmitting the retransmission packet on the second carrier. In the technical solutions of the present invention, when a delay in transmission of the retransmission packet is relatively large because duration of occupying the first carrier by the first device reaches maximum duration, the retransmission packet of the first carrier can be transmitted on the second carrier according to the first configuration information predefined between the first device and the second device. This resolves a prior-art problem that data transmission is delayed when a device needs to re-preempt an unlicensed carrier to transmit a retransmission packet.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a first schematic flowchart of a data transmission method according to an embodiment of the present invention;
FIG. 2 is a second schematic flowchart of a data transmission method according to an embodiment of the present invention;
FIG. 3 is a first schematic structural diagram of a first device according to an embodiment of the present invention;
FIG. 4 is a second schematic structural diagram of a first device according to an embodiment of the present invention;
FIG. 5 is a first schematic structural diagram of a second device according to an embodiment of the present invention;
FIG. 6 is a second schematic structural diagram of a second device according to an embodiment of the present invention;
FIG. 7 is a third schematic structural diagram of a first device according to an embodiment of the present invention;
FIG. 8 is a fourth schematic structural diagram of a first device according to an embodiment of the present invention;
FIG. 9 is a third schematic structural diagram of a second device according to an embodiment of the present invention;
FIG. 10 is a fourth schematic structural diagram of a second device according to an embodiment of the present invention; and
FIG. 11 is a schematic structural diagram of a data transmission system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention, which is defined in the appended claims. Any reference to "embodiment(s)" or "aspect(s) of the invention" in this description not falling under the scope of the claims should be interpreted as illustrative example(s) for understanding the invention.

It should be understood that, the technical solutions in the embodiments of the present invention may be applied to various communications systems, such as: a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, an LTE time division duplex (Time Division Duplex, TDD), a Universal Mobile Telecommunications System (Universal Mobile Telecommunication System, UMTS), and a Worldwide Interoperability for Microwave Access (Worldwide Interoperability for Microwave Access, WiMAX) communications system.

In the embodiments of the present invention, a first device may be a base transceiver station (English full name: Base Transceiver Station, BTS for short) in GSM or CDMA, or may be a NodeB (NodeB) in WCDMA, or may be an evolved NodeB (English full name: evolved Node B, eNB or e-NodeB for short) in LTE, and this is not limited in the embodiments of the present invention.

It should be understood that in the embodiments of the present invention, a second device includes but is not limited to user equipment (English full name: User Equipment, UE for short), a mobile station (English full name: Mobile Station, MS for short), a mobile terminal (Mobile Terminal), a mobile telephone (Mobile Telephone), a handset (handset), portable equipment (portable equipment), and the like. The user equipment may communicate with one or more core networks by using a radio access network (English full name: Radio Access Network, RAN for short). For example, the user equipment may be a mobile telephone (or referred to as a "cellular" phone), or a computer having a wireless communication function; or the user equipment may be a portable, pocket-sized, handheld, computer built-in, or in-vehicle mobile apparatus.

It can be understood that, when the first device is a base station, the second device is user equipment; when the first device is user equipment, the second device is a base station; or when the first device is user equipment, the second device may also be user equipment. The second device may be a receiving device for receiving data sent by the first device, and this is not specifically limited in the present invention.

It should be understood that, a data transmission method provided in the embodiments of the present invention may be applicable to a wireless communications system. In the embodiments of the present invention, the method is described by using an example in which the method is applied to an LTE (Long Term Evolution, Long Term Evolution)/LAA-LTE (LicensedAssisted Access Using Long Term Evolution, licensed-assisted access using Long Term Evolution) wireless communications system, and this does not constitute a limitation on the present invention.

In an existing LTE system, an eNB sends an initially transmitted packet on an n^{th} subframe of an unlicensed carrier whose carrier number is 1, UE feeds back a NACK/ACK message in an (n+4)^{th} subframe, and after receiving the NACK feedback message, the eNB needs to retransmit a to-be-retransmitted data packet in a subframe following an (n+8)^{th} subframe (including the (n+8)^{th} subframe). Each retransmission packet of the carrier whose carrier number is 1 has a unique HARQ process number. Duration of occupying a channel of an unlicensed carrier by the eNB is limited. For example, if duration of occupying the unlicensed carrier whose carrier number is 1 by the eNB is 10 ms (or it may be understood as duration of transmitting data of ten subframes), a retransmission packet after the third subframe is to be transmitted in the eleventh subframe. In this case, the duration of occupying the unlicensed carrier whose carrier number is 1 by the eNB reaches maximum duration. Therefore, transmission of the retransmission packet after the third subframe is interrupted, and the UE needs to wait to transmit the retransmission packet after the eNB re-preempts the channel, resulting in a relatively large data delay.

### Embodiment 1

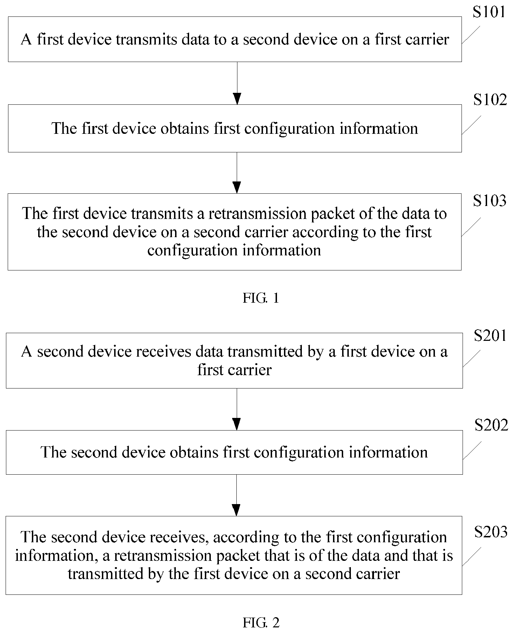

This embodiment of the present invention provides a data transmission method. As shown in FIG. 1, FIG. 1 is a schematic flowchart of the data transmission method, and the data transmission method includes the following steps.

S101. A first device transmits data to a second device on a first carrier.

The first carrier is an unlicensed carrier.

In an LAA-LTE system, the first device uses a channel resource by using an LBT (listen before talk, listen before talk) rule, and LBT is a CSMA (carrier sense multiple access, carrier sense multiple access) technology. That is, the first device first learns by means of listening that a channel resource on an unlicensed spectrum is idle, and then uses the channel resource on the unlicensed spectrum to transmit data. A carrier on the unlicensed spectrum is an unlicensed carrier. LBT includes two operation modes: an LBE (load based equipment, load based equipment) operation mode and an FBE (frame based equipment, frame based equipment) operation mode. After successfully contending for a channel resource by means of LBE or FBE, the first device sends data by occupying a channel. Maximum duration of occupying the channel by the first device is limited, and therefore, the first device cannot always occupy an unlicensed carrier to transmit data, and after occupying the unlicensed carrier for a period of time, the first device releases the unlicensed carrier resource.

S102. The first device obtains first configuration information.

The first configuration information indicates a sequence or a location of transmitting the retransmission packet on a second carrier. That the first device obtains first configuration information specifically includes: the first device determines the first configuration information, and sends the first configuration information to the second device; or the first device receives the first configuration information sent by the second device; or the first device receives the first configuration information sent by a third device.

A sequence between S101 and S102 is not limited.

S103. The first device transmits a retransmission packet of the data to the second device on a second carrier according to the first configuration information.

The first configuration information indicates a sequence or a location of transmitting the retransmission packet on the second carrier. When only data of the second carrier is transmitted on the second carrier, the first carrier and the second carrier in this solution are a same carrier. When more than data of the second carrier is transmitted on the second carrier, the first carrier and the second carrier in this solution are different carriers.

It should be noted that, the first device transmits an initially transmitted packet to the second device on the first carrier, and transmits some or all retransmission packets that belong to the first carrier to the second device by using the second carrier. The second carrier is a licensed carrier or an unlicensed carrier.

It should be additionally noted that, when the first device may transmit the retransmission packet to the second device on the first carrier, the first device may choose to transmit the retransmission packet to the second device on the first carrier, or may choose to transmit the retransmission packet to the second device on the second carrier. When transmission of the data on the first carrier by the first device is interrupted, that is, the first device cannot transmit the retransmission packet to the second device on the first carrier, the first device transmits the retransmission packet to the second device on the second carrier.

In the technical solution provided in this embodiment of the present invention, an initially transmitted packet and a retransmission packet of the second carrier and a retransmission packet of an unlicensed carrier (that is, the first carrier) may be transmitted on the second carrier.

Specifically, the first configuration information indicates a sequence or a location of transmitting each retransmission packet on the second carrier, so that after receiving the retransmission packet transmitted by the first device on the second carrier, the second device can determine, according to the first configuration information, a carrier to which each retransmission packet belongs.

It should be additionally noted that, the first configuration information may be periodically updated according to a network environment, that is, the first configuration information is variable.

Specifically, this embodiment of the present invention provides the following three methods for transmitting the retransmission packet on the second carrier.
(1) The first configuration information is a carrier number sequence of the first carrier to which the retransmission packet belongs, and that the first device transmits a retransmission packet of the data to the second device on a second carrier according to the first configuration information specifically includes: the first device transmits the retransmission packet on the second carrier in the carrier number sequence of the first carrier according to the first configuration information. Specifically, a carrier number may be a number obtained by performing natural numbering on each carrier by the first device, or may be an ID of each carrier in a wireless communications system. This is not limited in the present invention.

For example, it is assumed that the first carrier is a carrier whose carrier number is 1, and a HARQ#C data packet of the first carrier needs to be retransmitted; and the second carrier is a licensed carrier whose carrier number is 2, and a HARQ#C data packet of the second carrier also needs to be retransmitted. A carrier number sequence (that is, a first sequence) that is configured in the first configuration information and that is of transmitting retransmission packets on the second carrier is (1, 2), that is, the retransmission packets are sequentially transmitted on the second carrier in the carrier number sequence (1, 2) of the carriers to which the retransmission packets belong. Herein, the sequence of transmitting the retransmission packets on the second carrier is: the HARQ#C data packet of the carrier whose carrier number is 1 is first transmitted, and then the HARQ#C data packet of the carrier whose carrier number is 2 is transmitted.

Further, it is assumed that retransmission packets of multiple first carriers need to be transmitted on the second carrier, that is, a HARQ#C data packet of a first carrier whose carrier number is 1 needs to be retransmitted, a HARQ#C data packet of a first carrier whose carrier number is 2 needs to be retransmitted, a HARQ#C data packet of a first carrier whose carrier number is 3 needs to be retransmitted, and a HARQ#C data packet of a licensed carrier whose carrier number is 4 (that is, the second carrier) needs to be retransmitted. A carrier number sequence that is configured in the first configuration information and that is of transmitting retransmission packets on the second carrier is (1, 2, 3, 4), that is, the retransmission packets are sequentially transmitted on the second carrier in the carrier number sequence (1, 2, 3, 4) of the carriers to which the retransmission packets belong. Herein, the sequence of transmitting the retransmission packets on the second carrier is: the HARQ#C data packet of the first carrier whose carrier number is 1 is first transmitted, the HARQ#C data packet of the first carrier whose carrier number is 2 is next transmitted, then the HARQ#C data packet of the first carrier whose carrier number is 3 is transmitted, and the HARQ#C data packet of the first carrier whose carrier number is 4 is finally transmitted.

For another example, when process numbers of to-be-retransmitted HARQ packets of all carriers are different, the to-be-retransmitted HARQ packets are sequentially transmitted in a sequence indicated by the first configuration information. It is assumed that retransmission packets of multiple first carriers need to be transmitted on the second carrier, that is, a HARQ#A data packet of a first carrier whose carrier number is 1 needs to be retransmitted, a HARQ#B data packet of a first carrier whose carrier number is 2 needs to be retransmitted, a HARQ#C data packet of a first carrier whose carrier number is 3 needs to be retransmitted, and a HARQ#D data packet of a licensed carrier whose carrier number is 4 (that is, the second carrier) needs to be retransmitted. A carrier number sequence that is configured in the first configuration information and that is of transmitting retransmission packets on the second carrier is (1, 2, 3, 4), that is, the retransmission packets are sequentially transmitted on the second carrier in the carrier number sequence (1, 2, 3, 4) of the carriers to which the retransmission packets belong. Herein, the sequence of transmitting the retransmission packets on the second carrier is: the HARQ#A data packet of the first carrier whose carrier number is 1 is first transmitted, the HARQ#B data packet of the first carrier whose carrier number is 2 is next transmitted, then the HARQ#C data packet of the first carrier whose carrier number is 3 is transmitted, and the HARQ#D data packet of the first carrier whose carrier number is 4 is finally transmitted.

It should be noted that in the foregoing embodiment, the carrier number sequence that is configured in the first configuration information and that is of transmitting the retransmission packets on the second carrier is (1, 2, 3, 4). It can be understood that the carrier number sequence for the retransmission packets that is configured in the first configuration information may be another sequence, such as (1, 3, 2, 4) or (3, 2, 1, 4). This is not enumerated herein.

For another example, in the foregoing embodiment, if a HARQ retransmission packet of a carrier does not need to be transmitted, the initially transmitted packet of the second carrier is transmitted in a location in which the HARQ retransmission packet of the carrier is supposed to be transmitted; or a HARQ retransmission packet of a carrier does not need to be transmitted, to-be-transmitted retransmission packets following the HARQ retransmission packet are successively arranged forward. In this case, the second device needs to determine, according to a NACK message fed back by the second device, a number of a carrier to which a retransmission packet received in the first sequence belongs.
(2) The first configuration information is a first location of transmitting the retransmission packet on the second carrier, the first location includes N subframes of the second carrier, and N is a positive integer; and that the first device transmits a retransmission packet of the data to the second device on a second carrier according to the first configuration information specifically includes: the first device transmits the retransmission packet in the first location of the second carrier according to the first configuration information.

It should be noted that in this manner, the first configuration information indicates the first location of transmitting the retransmission packet of the first carrier on the second carrier.

A location of retransmitting the retransmission packet on the second carrier may be the same as that on the first carrier. For example, if the first carrier is a carrier whose carrier number is 1, and a HARQ#C data packet of the first carrier is to be retransmitted in a subframe 1 of the carrier whose carrier number is 1, the first configuration information may indicate that the retransmission packet is to be retransmitted in the subframe 1 of the second carrier.

Specifically, it is assumed that retransmission packets of multiple first carriers need to be transmitted on the second carrier, that is, a HARQ#C data packet of a first carrier whose carrier number is 1 needs to be retransmitted, and the HARQ#C data packet is retransmitted in a subframe 1 of the first carrier whose carrier number is 1; a HARQ#C data packet of a first carrier whose carrier number is 2 needs to be retransmitted, and the HARQ#C data packet is retransmitted in a subframe 5 of the first carrier whose carrier number is 2; a HARQ#C data packet of a first carrier whose carrier number is 3 needs to be retransmitted, and the HARQ#C data packet is retransmitted in a subframe 8 of the first carrier whose carrier number is 3; and a HARQ#C data packet of a licensed carrier whose carrier number is 4 (that is, the second carrier) needs to be retransmitted, and the HARQ#C data packet is retransmitted in a subframe 10 of the second carrier whose carrier number is 4. A location that is configured in the first configuration information and that is of transmitting a retransmission packet of each carrier on the second carrier may be: the retransmission packet of the first carrier whose carrier number is 1 is retransmitted in the subframe 1 of the second carrier, the retransmission packet of the first carrier whose carrier number is 2 is retransmitted in the subframe 5 of the second carrier, the retransmission packet of the first carrier whose carrier number is 3 is retransmitted in the subframe 8 of the second carrier, and the retransmission packet of the second carrier whose carrier number is 4 is retransmitted in the subframe 10 of the second carrier.

It can be understood that, the first location indicated by the first configuration information may be another location. For example, a retransmission packet of a first carrier whose carrier number is 1 is retransmitted in a subframe 3 and a subframe 4 of the second carrier, a retransmission packet of a first carrier whose carrier number is 2 is retransmitted in a subframe 5 of the second carrier, a retransmission packet of a first carrier whose carrier number is 3 is retransmitted in a subframe 7 of the second carrier, a retransmission packet of a second carrier whose carrier number is 4 is retransmitted in a subframe 9, a subframe 10, and a subframe 11 of the second carrier, and so on. That is, the first configuration information may indicate any first location of transmitting a retransmission packet of each carrier on the second carrier, the first location includes N subframes, and N is greater than or equal to 1. This is not limited in the present invention.

It should be additionally noted that, if the first configuration information indicates a first location, for a first carrier, of transmitting a retransmission packet of the first carrier on the second carrier, but the retransmission packet of the first carrier does not need to be transmitted, the first location may be used to transmit the initially transmitted packet of the second carrier.
(3) If the first device further transmits a retransmission packet that belongs to a third carrier to the second device on the second carrier, the first configuration information further includes an offset P of a second location, of transmitting the retransmission packet of the third carrier on the second carrier, relative to the first location, the second location includes M subframes of the second carrier, M is a positive integer, and P is 0 or a positive integer; and the method further includes: transmitting, by the first device, the retransmission packet of the third carrier in the second location of the second carrier according to the first configuration information.

This embodiment of the present invention further provides another method for retransmitting a retransmission packet. Specifically, when retransmission packets that belong to multiple first carriers are transmitted on the second carrier, the first configuration information may indicate a location (that is, a first location) of retransmitting a retransmission packet of only one of the multiple first carriers on the second carrier, and the first configuration information indicates an offset, of a location of transmitting a retransmission packet of another first carrier on the second carrier, relative to the first location. Specifically, if the first device transmits the retransmission packet that belongs to the first carrier to the second device on the second carrier, and further transmits a retransmission packet that belongs to another first carrier (that is, the third carrier) to the second device on the second carrier, the first configuration information obtained by the first device indicates the first location of transmitting the retransmission packet of the first carrier on the second carrier, and indicates the offset P, of the second location of transmitting the retransmission packet of the third carrier on the second carrier, relative to the first location.

It can be understood that, if multiple retransmission data packets of the third carrier need to be retransmitted on the second carrier, in addition to the offset P, of the second location of transmitting the retransmission packet of the third carrier on the second carrier, relative to the first location, the first configuration information may indicate a quantity of subframes of the second carrier that are included in the second location. For example, the first configuration information indicates that the second location includes M subframes of the second carrier, and M is a positive integer.

For example, a HARQ#C data packet of a first carrier whose carrier number is 1 needs to be retransmitted, and the first configuration information indicates that the retransmission packet of the first carrier whose carrier number is 1 is transmitted in a subframe 1 (that is, the first location) of the second carrier. If an offset between the first location and a location of retransmitting a retransmission packet of a third carrier whose carrier number is 2 on the second carrier is two subframes (P is 2 herein), the location of retransmitting the retransmission packet of the third carrier whose carrier number is 2 on the second carrier is a subframe 3; if an offset between the first location and a location of retransmitting a retransmission packet of a third carrier whose carrier number is 3 on the second carrier is six subframes (P is 6 herein), the location of retransmitting the retransmission packet of the third carrier whose carrier number is 3 on the second carrier is a subframe 7; and if an offset between the first location and a location of retransmitting a retransmission packet of a licensed carrier whose carrier number is 4 (that is, the second carrier) on the second carrier is eight subframes (P is 8 herein), the location of retransmitting the retransmission packet of the licensed carrier whose carrier number is 4 on the second carrier is a subframe 9.

Further, if a retransmission packet of a carrier does not need to be transmitted on the second carrier, the first configuration information indicates that the initially transmitted packet of the second carrier may be transmitted in a location in which the retransmission packet of the carrier is supposed to be transmitted on the second carrier.

It should be noted that, when the first device is in an on state on an unlicensed carrier (for example, the first carrier), it indicates that the first device currently uses the first carrier to transmit data, and when the first device is in an off state on the first carrier, it indicates that the first device currently cannot use the first carrier to transmit data. Therefore, when the second device learns that the first device is in an on/off state on the first carrier, according to a convention between the first device and the second device, the retransmission packet of the data transmitted by the first device on the first carrier may be transmitted on the first carrier or may be transmitted on the second carrier. When the second device does not learn whether the first device is in an on/off state on the first carrier, the retransmission packet of the data transmitted by the first device on the first carrier is transmitted on the second carrier.

According to the data transmission method provided in this embodiment of the present invention, the first device transmits the data to the second device on the first carrier; the first device obtains the first configuration information; and the first device transmits the retransmission packet of the data to the second device on the second carrier according to the first configuration information, where the first configuration information indicates the sequence or the location of transmitting the retransmission packet on the second carrier. In the technical solution of the present invention, when a delay in transmission of the retransmission packet is relatively large because duration of occupying the first carrier by the first device reaches maximum duration, the retransmission packet of the first carrier can be transmitted on the second carrier according to the first configuration information predefined between the first device and the second device. This resolves a prior-art problem that data transmission is delayed when a device needs to re-preempt an unlicensed carrier to transmit a retransmission packet.

### Embodiment 2

This embodiment of the present invention provides a data transmission method. As shown in FIG. 2, FIG. 2 is a schematic flowchart of the data transmission method, and the data transmission method includes the following steps.

S201. A second device receives data transmitted by a first device on a first carrier.

The first carrier is an unlicensed carrier.

S202. The second device obtains first configuration information.

The first configuration information indicates a sequence or a location of transmitting the retransmission packet on a second carrier. That the second device obtains first configuration information specifically includes: the second device determines the first configuration information, and sends the first configuration information to the first device; or the second device receives the first configuration information sent by the first device; or the second device receives the first configuration information sent by a third device.

A sequence between S201 and S202 is not limited.

S203. The second device receives, according to the first configuration information, a retransmission packet that is of the data and that is transmitted by the first device on a second carrier.

The first configuration information indicates a sequence or a location of transmitting the retransmission packet on the second carrier. The second carrier is a licensed carrier or an unlicensed carrier. When only data of the second carrier is transmitted on the second carrier, the first carrier and the second carrier in this solution are a same carrier. When more than data of the second carrier is transmitted on the second carrier, the first carrier and the second carrier in this solution are different carriers.

Specifically, the first configuration information indicates a sequence or a location of transmitting each retransmission packet on the second carrier, so that after receiving the retransmission packet transmitted by the first device on the second carrier, the second device can determine, according to the first configuration information, a carrier to which each retransmission packet belongs.

It should be additionally noted that, the first configuration information may be periodically updated according to a network environment, that is, the first configuration information is variable.

The first configuration information is a carrier number sequence of the first carrier to which the retransmission packet belongs. That the second device receives, according to the first configuration information, a retransmission packet that is of the data and that is transmitted by the first device on a second carrier specifically includes: the second device receives, according to the first configuration information, the retransmission packet that is transmitted by the first device on the second carrier in the carrier number sequence of the first carrier.

After receiving the data transmitted by the first device by using the second carrier, the second device obtains a retransmission packet of each carrier according to the first configuration information. For specific content of the first configuration information, refer to example description in Embodiment 1 (1). Details are not described herein again.

The first configuration information is a first location of transmitting the retransmission packet on the second carrier, the first location includes N subframes of the second carrier, and N is a positive integer. That the second device receives, according to the first configuration information, a retransmission packet that is of the data and that is transmitted by the first device on a second carrier specifically includes: the second device receives, according to the first configuration information, the retransmission packet that is transmitted by the first device in the first location of the second carrier.

After receiving the data transmitted by the first device by using the second carrier, the second device obtains a retransmission packet of each carrier according to the first configuration information. For specific content of the first configuration information, refer to example description in Embodiment 1 (2). Details are not described herein again.

If the second device further receives, on the second carrier according to the first configuration information, a retransmission packet that belongs to a third carrier and that is transmitted by the first device, the first configuration information further includes an offset P of a second location, of transmitting the retransmission packet of the third carrier on the second carrier, relative to the first location, the second location includes M subframes of the second carrier, M is a positive integer, and P is 0 or a positive integer. The method further includes: receiving, by the second device according to the first configuration information, the retransmission packet that is of the third carrier and that is transmitted by the first device in the second location of the second carrier.

The third carrier is an unlicensed carrier.

After receiving the data transmitted by the first device by using the second carrier, the second device obtains a retransmission packet of each carrier according to the first configuration information. For specific content of the first configuration information, refer to example description in Embodiment 1 (3). Details are not described herein again.

It should be noted that, when the first device is in an on state on an unlicensed carrier (for example, the first carrier), it indicates that the first device currently uses the first carrier to transmit data, and when the first device is in an off state on the first carrier, it indicates that the first device currently cannot use the first carrier to transmit data. Therefore, when the second device learns that the first device is in an on/off state on the first carrier, according to a convention between the first device and the second device, the retransmission packet of the data transmitted by the first device on the first carrier may be transmitted on the first carrier or may be transmitted on the second carrier. When the second device does not learn whether the first device is in an on/off state on the first carrier, the retransmission packet of the data transmitted by the first device on the first carrier is transmitted on the second carrier.

According to the data transmission method provided in this embodiment of the present invention, the second device receives the data transmitted by the first device on the first carrier; the second device obtains the first configuration information; and the second device receives, according to the first configuration information, the retransmission packet that is of the data and that is transmitted by the first device on the second carrier, where the first configuration information indicates the sequence or the location of transmitting the retransmission packet on the second carrier. In the technical solution of the present invention, when a delay in transmission of the retransmission packet is relatively large because duration of occupying the first carrier by the first device reaches maximum duration, the retransmission packet of the first carrier can be transmitted on the second carrier according to the first configuration information predefined between the first device and the second device. This resolves a prior-art problem that data transmission is delayed when a device needs to re-preempt an unlicensed carrier to transmit a retransmission packet.

### Embodiment 3

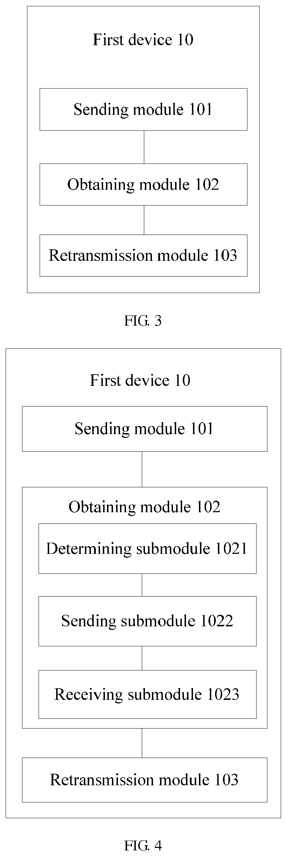

This embodiment of the present invention provides a first device 10. As shown in FIG. 3, FIG. 3 is a schematic structural diagram of the first device 10, and the first device 10 includes:
a sending module 101, configured to transmit data to a second device on a first carrier;
an obtaining module 102, configured to obtain first configuration information; and
a retransmission module 103, configured to transmit a retransmission packet of the data to the second device on a second carrier according to the first configuration information, where the first configuration information indicates a sequence or a location of transmitting the retransmission packet on the second carrier.

The first configuration information is a carrier number sequence of the first carrier to which the retransmission packet belongs. The retransmission module 103 is specifically configured to transmit the retransmission packet on the second carrier in the carrier number sequence of the first carrier according to the first configuration information.

The first configuration information is a first location of transmitting the retransmission packet on the second carrier, the first location includes N subframes of the second carrier, and N is a positive integer. The retransmission module 103 is specifically configured to transmit the retransmission packet in the first location of the second carrier according to the first configuration information.

If the retransmission module 103 is further configured to transmit a retransmission packet that belongs to a third carrier to the second device on the second carrier, the first configuration information further includes an offset P of a second location, of transmitting the retransmission packet of the third carrier on the second carrier, relative to the first location, the second location includes M subframes of the second carrier, M is a positive integer, and P is 0 or a positive integer. The retransmission module 103 is further configured to transmit the retransmission packet of the third carrier in the second location of the second carrier according to the first configuration information.

The first carrier and the third carrier are unlicensed carriers.

As shown in FIG. 4, the obtaining module 102 includes:
a determining submodule 1021, configured to determine the first configuration information;
a sending submodule 1022, configured to send the first configuration information to the second device; and
a receiving submodule 1023, configured to receive the first configuration information sent by the second device.

The receiving submodule 1023 is further configured to receive the first configuration information sent by a third device.

According to the first device provided in this embodiment of the present invention, the sending module is configured to transmit the data to the second device on the first carrier; the obtaining module is configured to obtain the first configuration information; and the retransmission module is configured to transmit the retransmission packet of the data to the second device on the second carrier according to the first configuration information, where the first configuration information indicates the sequence or the location of transmitting the retransmission packet on the second carrier. In the technical solution of the present invention, when a delay in transmission of the retransmission packet is relatively large because duration of occupying the first carrier by the first device reaches maximum duration, the retransmission packet of the first carrier can be transmitted on the second carrier according to the first configuration information predefined between the first device and the second device. This resolves a prior-art problem that data transmission is delayed when a device needs to re-preempt an unlicensed carrier to transmit a retransmission packet.

### Embodiment 4

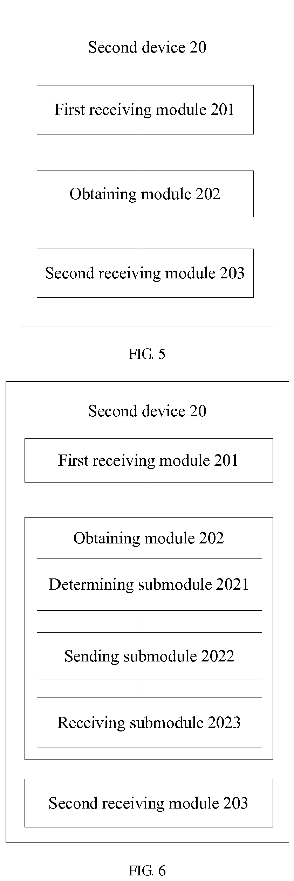

This embodiment of the present invention provides a second device 20. As shown in FIG. 5, the second device 20 includes:
a first receiving module 201, configured to receive data transmitted by a first device on a first carrier;
an obtaining module 202, configured to obtain first configuration information; and
a second receiving module 203, configured to receive, according to the first configuration information, a retransmission packet that is of the data and that is transmitted by the first device on a second carrier, where the first configuration information indicates a sequence or a location of transmitting the retransmission packet on the second carrier.

The first configuration information is a carrier number sequence of the first carrier to which the retransmission packet belongs. The second receiving module 203 is specifically configured to receive, according to the first configuration information, the retransmission packet that is transmitted by the first device on the second carrier in the carrier number sequence of the first carrier.

The first configuration information is a first location of transmitting the retransmission packet on the second carrier, the first location includes N subframes of the second carrier, and N is a positive integer. The second receiving module 203 is specifically configured to receive, according to the first configuration information, the retransmission packet that is transmitted by the first device in the first location of the second carrier.

If the second receiving module 203 is further configured to receive, on the second carrier according to the first configuration information, a retransmission packet that belongs to a third carrier and that is transmitted by the first device, the first configuration information further includes an offset P of a second location, of transmitting the retransmission packet of the third carrier on the second carrier, relative to the first location, the second location includes M subframes of the second carrier, M is a positive integer, and P is 0 or a positive integer. The second receiving module 203 is further specifically configured to receive, according to the first configuration information, the retransmission packet that is of the third carrier and that is transmitted by the first device in the second location of the second carrier.

The first carrier and the third carrier are unlicensed carriers.

As shown in FIG. 6, the obtaining module 202 includes:
a determining submodule 2021, configured to determine the first configuration information;
a sending submodule 2022, configured to send the first configuration information to the first device; and
a receiving submodule 2023, configured to receive the first configuration information sent by the first device.

The receiving submodule 2023 is further configured to receive the first configuration information sent by a third device.

According to the second device provided in this embodiment of the present invention, the first receiving module is configured to receive the data that is transmitted by the first device on the first carrier; the obtaining module is configured to obtain the first configuration information; and the second receiving module is configured to receive, according to the first configuration information, the retransmission packet that is of the data and that is transmitted by the first device on the second carrier, where the first configuration information indicates the sequence or the location of transmitting the retransmission packet on the second carrier. In the technical solution of the present invention, when a delay in transmission of the retransmission packet is relatively large because duration of occupying the first carrier by the first device reaches maximum duration, the retransmission packet of the first carrier can be transmitted on the second carrier according to the first configuration information predefined between the first device and the second device. This resolves a prior-art problem that data transmission is delayed when a device needs to re-preempt an unlicensed carrier to transmit a retransmission packet.

### Embodiment 5

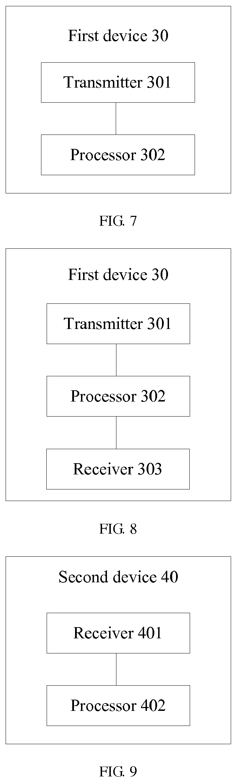

This embodiment of the present invention provides a first device 30. As shown in FIG. 7, the first device 30 includes:
a transmitter 301, configured to transmit data to a second device on a first carrier; and
a processor 302, configured to obtain first configuration information.

The transmitter 301 is further configured to transmit a retransmission packet of the data to the second device on a second carrier according to the first configuration information, where the first configuration information indicates a sequence or a location of transmitting the retransmission packet on the second carrier.

The first configuration information is a carrier number sequence of the first carrier to which the retransmission packet belongs. The transmitter 301 is specifically configured to transmit the retransmission packet on the second carrier in the carrier number sequence of the first carrier according to the first configuration information.

The first configuration information is a first location of transmitting the retransmission packet on the second carrier, the first location includes N subframes of the second carrier, and N is a positive integer. The transmitter 301 is specifically configured to transmit the retransmission packet in the first location of the second carrier according to the first configuration information.

If the transmitter 301 is further configured to transmit a retransmission packet that belongs to a third carrier to the second device on the second carrier, the first configuration information further includes an offset P of a second location, of transmitting the retransmission packet of the third carrier on the second carrier, relative to the first location, the second location includes M subframes of the second carrier, M is a positive integer, and P is 0 or a positive integer. The transmitter 301 is further specifically configured to transmit the retransmission packet of the third carrier in the second location of the second carrier according to the first configuration information. The first carrier and the third carrier are unlicensed carriers.

The processor 302 is specifically configured to determine the first configuration information.

The transmitter 301 is further configured to send the first configuration information to the second device.

As shown in FIG. 8, the first device 30 further includes a receiver 303, and the receiver 303 is configured to receive the first configuration information sent by the second device.

The receiver 303 is further configured to receive the first configuration information sent by a third device.

According to the first device provided in this embodiment of the present invention, the transmitter is configured to transmit the data to the second device on the first carrier; the processor is configured to obtain the first configuration information; and the transmitter is further configured to transmit the retransmission packet of the data to the second device on the second carrier according to the first configuration information, where the first configuration information indicates the sequence or the location of transmitting the retransmission packet on the second carrier. In the technical solution of the present invention, when a delay in transmission of the retransmission packet is relatively large because duration of occupying the first carrier by the first device reaches maximum duration, the retransmission packet of the first carrier can be transmitted on the second carrier according to the first configuration information predefined between the first device and the second device. This resolves a prior-art problem that data transmission is delayed when a device needs to re-preempt an unlicensed carrier to transmit a retransmission packet.

### Embodiment 6

This embodiment of the present invention provides a second device 40. As shown in FIG. 9, the second device 40 includes:
a receiver 401, configured to receive data transmitted by a first device on a first carrier; and
a processor 402, configured to obtain first configuration information.

The receiver 401 is further configured to receive, according to the first configuration information, a retransmission packet that is of the data and that is transmitted by the first device on a second carrier, where the first configuration information indicates a sequence or a location of transmitting the retransmission packet on the second carrier.

The first configuration information is a carrier number sequence of the first carrier to which the retransmission packet belongs. The receiver 401 is specifically configured to receive, according to the first configuration information, the retransmission packet that is transmitted by the first device on the second carrier in the carrier number sequence of the first carrier.

The first configuration information is a first location of transmitting the retransmission packet on the second carrier, the first location includes N subframes of the second carrier, and N is a positive integer. The receiver 401 is specifically configured to receive, according to the first configuration information, the retransmission packet that is transmitted by the first device in the first location of the second carrier.

If the receiver 401 is further configured to receive, on the second carrier according to the first configuration information, a retransmission packet that belongs to a third carrier and that is transmitted by the first device, the first configuration information further includes an offset P of a second location, of transmitting the retransmission packet of the third carrier on the second carrier, relative to the first location, the second location includes M subframes of the second carrier, M is a positive integer, and P is 0 or a positive integer. The receiver 401 is further specifically configured to receive, according to the first configuration information, the retransmission packet that is of the third carrier and that is transmitted by the first device in the second location of the second carrier. The first carrier and the third carrier are unlicensed carriers.

The processor 402 is specifically configured to determine the first configuration information.

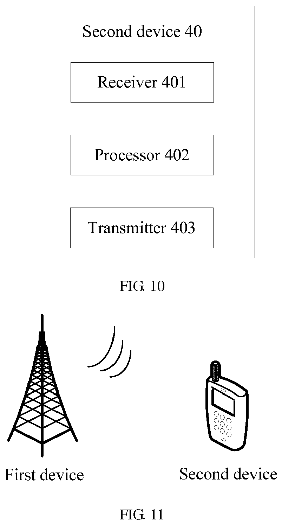

As shown in FIG. 10, the second device 40 further includes a transmitter 403, configured to send the first configuration information to the first device.

The receiver 401 is configured to receive the first configuration information sent by the first device.

The receiver 401 is further configured to receive the first configuration information sent by a third device.

According to the second device provided in this embodiment of the present invention, the receiver is configured to receive the data that is transmitted by the first device on the first carrier; the processor is configured to obtain the first configuration information; and the receiver is further configured to receive, according to the first configuration information, the retransmission packet that is of the data and that is transmitted by the first device on the second carrier, where the first configuration information indicates the sequence or the location of transmitting the retransmission packet on the second carrier. In the technical solution of the present invention, when a delay in transmission of the retransmission packet is relatively large because duration of occupying the first carrier by the first device reaches maximum duration, the retransmission packet of the first carrier can be transmitted on the second carrier according to the first configuration information predefined between the first device and the second device. This resolves a prior-art problem that data transmission is delayed when a device needs to re-preempt an unlicensed carrier to transmit a retransmission packet.

### Embodiment 7

This embodiment of the present invention provides a data transmission system. As shown in FIG. 11, the data transmission system includes the first device described in Embodiment 3 and the second device described in Embodiment 4, or includes the first device described in Embodiment 5 and the second device described in Embodiment 6. In the technical solution of the present invention, when a delay in transmission of a retransmission packet is relatively large because duration of occupying a first carrier by the first device reaches maximum duration, a retransmission packet of the first carrier can be transmitted on a second carrier according to first configuration information predefined between the first device and the second device. This resolves a prior-art problem that data transmission is delayed when a device needs to re-preempt an unlicensed carrier to transmit a retransmission packet.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A first device comprising:
• a sending module (101) configured to transmit data to a second device on a first carrier;
• an obtaining module (102) configured to obtain first configuration information, wherein the first configuration information is a first location of transmitting a retransmission packet on a second carrier, the first location comprises N subframes of the second carrier, and N is a positive integer; and
• a retransmission module (103) configured to transmit the retransmission packet of the data to the second device on the second carrier according to the first configuration information,
• wherein the retransmission module (103) is further configured to transmit a retransmission packet that belongs to a third carrier to the second device on the second carrier, the first configuration information further comprises an offset P of a second location, of transmitting the retransmission packet of the third carrier on the second carrier, relative to the first location, the second location comprises M subframes of the second carrier, M is a positive integer, and P is o or a positive integer; and
the retransmission module (103) is further configured to transmit the retransmission packet of the third carrier in the second location of the second carrier according to the first configuration information, wherein the first and third carriers are unlicensed carriers.

2. The first device according to claim 1, wherein the obtaining module comprises:
a determining submodule configured to determine the first configuration information and
a sending submodule configured to send the first configuration information to the second device; or
a receiving submodule configured to receive the first configuration information sent by the second device; or a
receiving submodule configured to receive the first configuration information sent by a third device.

3. A second device comprising:
• a first receiving module (201) configured to receive data transmitted by a first device on a first carrier;
• an obtaining module (202) configured to obtain first configuration information, wherein the first configuration information is a first location of receiving a retransmission packet on a second carrier, the first location comprises N subframes of the second carrier, and N is a positive integer; and
• a second receiving module (203) configured to receive, according to the first configuration information, the retransmission packet that is of the data and that is transmitted by the first device on the second carrier
• wherein the second receiving module (203) is further configured to receive, on the second carrier according to the first configuration information, a retransmission packet that belongs to a third carrier and that is transmitted by the first device, the first configuration information further comprises an offset P of a second location, of receiving the retransmission packet of the third carrier on the second carrier, relative to the first location, the second location comprises M subframes of the second carrier, M is a positive integer, and P is o or a positive integer; and
• the second receiving module (203) is further specifically configured to receive, according to the first configuration information, the retransmission packet that is of the third carrier and that is transmitted by the first device in the second location of the second carrier, wherein the first and third carriers are unlicensed carriers.

4. The second device according to claim 3, wherein the obtaining module comprises:
a determining submodule configured to determine the first configuration information and
a sending submodule configured to send the first configuration information to the first device; or
a receiving submodule configured to receive the first configuration information sent by the first device; or a receiving submodule ib configured to receive the first configuration information sent by a third device.

## Patentansprüche

1. Eine erste Vorrichtung aufweisend:
• ein Sendemodul (101), das dafür ausgelegt ist, Daten auf einem ersten Träger zu einer zweiten Vorrichtung zu übermitteln;
• ein Erfassungsmodul (102), das dafür ausgelegt ist, erste Konfigurationsinformationen zu erfassen, wobei die ersten Konfigurationsinformationen eine erste Position zur Übermittlung eines Neuübertragungspakets auf einem zweiten Träger sind, wobei die erste Position N Teilrahmen des zweiten Trägers aufweist und N eine positive ganze Zahl ist; und
• ein Neuübertragungsmodul (103), das dafür ausgelegt ist, das Neuübertragungspaket der Daten im Einklang mit den ersten Konfigurationsinformationen auf dem zweiten Träger zur zweiten Vorrichtung zu übermitteln,
• wobei das Neuübertragungsmodul (103) ferner dafür ausgelegt ist, ein Neuübertragungspaket, das zu einem dritten Träger gehört, auf dem zweiten Träger zur zweiten Vorrichtung zu übermitteln, wobei die ersten Konfigurationsinformationen ferner einen Versatz P einer zweiten Position zur Übermittlung des Neuübertragungspakets des dritten Trägers auf dem zweiten Träger relativ zur ersten Position aufweisen, wobei die zweite Position M Teilrahmen des zweiten Trägers aufweist, M eine positive ganze Zahl ist und P 0 oder eine positive ganze Zahl ist; und
das Neuübertragungsmodul (103) ferner dafür ausgelegt ist, das Neuübertragungspaket des dritten Trägers in der zweiten Position des zweiten Trägers im Einklang mit den ersten Konfigurationsinformationen zu übermitteln, wobei die ersten und dritten Träger nicht lizensierte Träger sind.

2. Die erste Vorrichtung nach Anspruch 1, wobei das Erfassungsmodul aufweist:
ein Bestimmungsuntermodul, das dafür ausgelegt ist, die ersten Konfigurationsinformationen zu bestimmen, und
ein Sendeuntermodul, das dafür ausgelegt ist, die ersten Konfigurationsinformationen zur zweiten Vorrichtung zu senden; oder
ein Empfangsuntermodul, das dafür ausgelegt ist, die durch die zweite Vorrichtung gesendeten ersten Konfigurationsinformationen zu empfangen; oder
ein Empfangsuntermodul, das dafür ausgelegt ist, die durch eine dritte Vorrichtung gesendeten ersten Konfigurationsinformationen zu empfangen.

3. Eine zweite Vorrichtung aufweisend:
• ein erstes Empfangsmodul (201), das dafür ausgelegt ist, durch eine erste Vorrichtung auf einem ersten Träger übermittelte Daten zu empfangen;
• ein Erfassungsmodul (202), das dafür ausgelegt ist, erste Konfigurationsinformationen zu erfassen, wobei die ersten Konfigurationsinformationen eine erste Position zum Empfang eines Neuübertragungspakets auf einem zweiten Träger sind, wobei die erste Position N Teilrahmen des zweiten Trägers aufweist und N eine positive ganze Zahl ist; und
• ein zweites Empfangsmodul (203), das dafür ausgelegt ist, im Einklang mit den ersten Konfigurationsinformationen das Neuübertragungspaket der Daten, das durch die erste Vorrichtung auf dem zweiten Träger übermittelt wird, zu empfangen,
• wobei das zweite Empfangsmodul (203) ferner dafür ausgelegt ist, ein Neuübertragungspaket, das zu einem dritten Träger gehört und das durch die erste Vorrichtung auf dem zweiten Träger übermittelt wird, im Einklang mit den ersten Konfigurationsinformationen zu empfangen, wobei die ersten Konfigurationsinformationen ferner einen Versatz P einer zweiten Position zum Empfang des Neuübertragungspakets des dritten Trägers auf dem zweiten Träger relativ zur ersten Position aufweisen, wobei die zweite Position M Teilrahmen des zweiten Trägers aufweist, M eine positive ganze Zahl ist und P 0 oder eine positive ganze Zahl ist; und
• das zweite Empfangsmodul (203) ferner speziell dafür ausgelegt ist, im Einklang mit den ersten Konfigurationsinformationen das Neuübertragungspaket zu empfangen, das vom dritten Träger stammt und das durch die erste Vorrichtung in der zweiten Position des zweiten Trägers übermittelt wird, wobei die ersten und dritten Träger nicht lizensierte Träger sind.

4. Die zweite Vorrichtung nach Anspruch 3, wobei das Erfassungsmodul aufweist:
ein Bestimmungsuntermodul, das dafür ausgelegt ist, die ersten Konfigurationsinformationen zu bestimmen, und
ein Sendeuntermodul, das dafür ausgelegt ist, die ersten Konfigurationsinformationen zur ersten Vorrichtung zu senden; oder
ein Empfangsuntermodul, das dafür ausgelegt ist, die durch die erste Vorrichtung gesendeten ersten Konfigurationsinformationen zu empfangen; oder
ein Empfangsuntermodul, das dafür ausgelegt ist, die durch eine dritte Vorrichtung gesendeten ersten Konfigurationsinformationen zu empfangen.

## Revendications

1. Premier dispositif comprenant :
• un module d'envoi (101) configuré pour transmettre des données à un deuxième dispositif sur une première porteuse ;
• un module d'obtention (102) configuré pour obtenir des premières informations de configuration, dans lequel les premières informations de configuration sont un premier emplacement de transmission d'un paquet de retransmission sur une deuxième porteuse, le premier emplacement comprend N sous-trames de la deuxième porteuse, et N est un nombre entier positif ; et
• un module de retransmission (103) configuré pour transmettre le paquet de retransmission des données au deuxième dispositif sur la deuxième porteuse selon les premières informations de configuration,
• dans lequel le module de retransmission (103) est en outre configuré pour transmettre un paquet de retransmission qui appartient à une troisième porteuse au deuxième dispositif sur la deuxième porteuse, les premières informations de configuration comprennent en outre un décalage P d'un second emplacement, de transmission du paquet de retransmission de la troisième porteuse sur la deuxième porteuse, par rapport au premier emplacement, le second emplacement comprend M sous-trames de la deuxième porteuse, M est un nombre entier positif, et P vaut 0 ou est un nombre entier positif ; et
le module de retransmission (103) est en outre configuré pour transmettre le paquet de retransmission de la troisième porteuse dans le second emplacement de la deuxième porteuse selon les premières informations de configuration, dans lequel les première et troisième porteuses sont des porteuses sans licence.

2. Premier dispositif selon la revendication 1, dans lequel le module d'obtention comprend :
un sous-module de détermination configuré pour déterminer les premières informations de configuration et
un sous-module d'envoi configuré pour envoyer les premières informations de configuration au deuxième dispositif ; ou
un sous-module de réception configuré pour recevoir les premières informations de configuration envoyées par le deuxième dispositif ; ou
un sous-module de réception configuré pour recevoir les premières informations de configuration envoyées par un troisième dispositif.

3. Deuxième dispositif comprenant :
• un premier module de réception (201) configuré pour recevoir des données transmises par un premier dispositif sur une première porteuse ;
• un module d'obtention (202) configuré pour obtenir des premières informations de configuration, dans lequel les premières informations de configuration sont un premier emplacement de réception d'un paquet de retransmission sur une deuxième porteuse, le premier emplacement comprend N sous-trames de la deuxième porteuse, et N est un nombre entier positif ; et
• un second module de réception (203) configuré pour recevoir, selon les premières informations de configuration, le paquet de retransmission qui est un paquet de retransmission des données et qui est transmis par le premier dispositif sur la deuxième porteuse
• dans lequel le second module de réception (203) est en outre configuré pour recevoir, sur la deuxième porteuse selon les premières informations de configuration, un paquet de retransmission qui appartient à une troisième porteuse et qui est transmis par le premier dispositif, les premières informations de configuration comprennent en outre un décalage P d'un second emplacement, de réception du paquet de retransmission de la troisième porteuse sur la deuxième porteuse, par rapport au premier emplacement, le second emplacement comprend M sous-trames de la deuxième porteuse, M est un nombre entier positif, et P vaut 0 ou est un nombre entier positif ; et
• le second module de réception (203) est en outre spécifiquement configuré pour recevoir, selon les premières informations de configuration, le paquet de retransmission qui est un paquet de retransmission de la troisième porteuse et qui est transmis par le premier dispositif dans le second emplacement de la deuxième porteuse, dans lequel les première et troisième porteuses sont des porteuses sans licence.

4. Deuxième dispositif selon la revendication 3, dans lequel le module d'obtention comprend :
un sous-module de détermination configuré pour déterminer les premières informations de configuration et
un sous-module d'envoi configuré pour envoyer les premières informations de configuration au premier dispositif ; ou
un sous-module de réception configuré pour recevoir les premières informations de configuration envoyées par le premier dispositif ; ou
un sous-module de réception configuré pour recevoir les premières informations de configuration envoyées par un troisième dispositif.
